Europäisches Patentamt

European Patent Office

Office européen des brevets

(11) Publication number: **0 466 276 A1**

# EUROPEAN PATENT APPLICATION

(21) Application number: **91201811.6**

(22) Date of filing: **10.07.91**

(51) Int. Cl.5: **F16L 25/00**

(30) Priority: **12.07.90 NL 9001592**

(43) Date of publication of application:
**15.01.92 Bulletin 92/03**

(84) Designated Contracting States:
**AT BE CH DE DK ES FR GB GR IT LI LU NL SE**

(71) Applicant: **WAVIN B.V.**
**Händellaan 251**
**NL-8031 EM Zwolle(NL)**

(72) Inventor: **Offringa., Oege René**
**5, Bovenmaat**
**NL-7772 JE Hardenberg(NL)**
Inventor: **Gaikema, Gjalt Martinus**
**104, de Aak**
**NL-7701 LC Dedemsvaart(NL)**
Inventor: **Schut, Otto**
**82, de Aak**
**NL-7701 LC Dedemsvaart(NL)**

(74) Representative: **van der Veken, Johannes**
**Adriaan et al**
**EXTERPATENT P.O. Box 90649**
**NL-2509 LP The Hague(NL)**

(54) **Connection of a cable duct of thermoplastic meterial to another element connected to the cable duct, and method and device used in making such a connection.**

(57) A metal wire 2 extending lengthwise in the wall of a cable duct 1 of thermoplastic material, accommodating a fibre optic cable 12, is connected at a distance from the free end 5 of the duct to another electrical conductor 7, 7' by means of a through-connection conductor 6. The other electrical conductor 7, may also be a metal wire extending lengthwise in another cable duct 3.

A metal wire 2, 7 in the wall of a cable duct is indicated at the outer side of the wall by a marking in the lengthwise direction of the duct 1, 3.

A section of the outer layer 20 of the wall of a cable duct 1, 3 is removed locally in order to provide an area to be connected to a through-connector conductor 6.

The section of the outer layer 20 is removed by a heated knife-type cutting element 19, a stripping chisel 18 or a cylindrical cutter 16. Said devices may be provided with a signal giver 12 being activated when the device comes into contact with metal wire 2.

It is also possible to connect metal wire 2 to connector 6 by pressing a heated or unheated screw 14 or conical pin 15 or thin plate 13 into the wall of the cable duct until said, plate 13, screw 14 or pin 15 engages metal wire 2.

Fig. 1.

The invention relates to a connection of a cable duct of thermoplastic material to another element connected to the cable duct.

Such a connection for making house connections of fibre optic telephone cables, in which a fibre optic telephone cable is placed in such a cable duct, are generally known.

When a fibre optic cable network is used in telephone exchanges it is customary to lay ring lines with multi-core fibre optic cables from which a maximum number of houses can always be connected at desired distances from distribution pits with single-core fibre optic cables. For protection, the fibre optic cables for these house connections are fitted in cable ducts with an external diameter of approximately 20 mm and a wall thickness of 3.5 mm.

Due to the absence of metal parts in the cable duct and in the fibre optic cables, it is very difficult to be able to detect a duct without digging.

For this purpose it is already known to incorporate one or more copper wires in the wall of a cable duct of thermoplastic material of the above-mentioned type when the duct is being extruded, these wires making it possible to detect the duct without digging.

Using reflection time measurement in such a copper wire, it is also easy to determine any break point, so that one well-directed digging operation can be carried out for repair.

However, this known connection has the disadvantage that one cable duct can be connected with a good seal to another cable duct or to a distribution pit, but connection of the electrical conductor in one cable duct to another electrical conductor in another cable duct or in a distribution pit is very difficult. This is all the more so because it is impossible to make or incorporate such a connection in a coupling piece of the duct connection.

The object of the invention is now to provide a connection of the above-mentioned type in which a first electrical conductor in a cable duct of thermoplastic material is connected well to at least one other electrical conductor which is outside said cable duct in another element connected thereto.

This object is achieved according to the invention in that the cable duct is provided with at least one elongated first electrical conductor embedded in the duct wall and running in the axial direction, which first electrical conductor is connected at a distance from the free end and at a distance from the connection of said duct to an electrical through-connection conductor extending outside the duct and connected with at least one other electrical conductor which is situated in the other element.

In this way it is easy to ensure a good and easily produced electrical conductance between said first electrical conductor and another electrical conductor in another element, without the connecting coupling piece of such a connection being adversely affected.

The position of the first electrical conductor in a cable duct in the peripheral direction is expediently indicated on the outside wall of the duct by a marking in the lengthwise direction.

This makes it possible easily to establish the position of the first electrical conductor and consequently also to produce the connection to the electrical through-connection conductor more easily.

The invention also relates to a method for making a connection of a cable duct of thermoplastic material to another element to be connected to the cable duct.

Such a method is also generally known, and for the connection of the first electrical conductor in a cable duct to at least one other electrical conductor in another element to be connected to the cable duct it is proposed according to the invention that the first electrical conductor of the cable duct provided with at least one first electrical conductor embedded in the duct wall and running in the axial direction is connected at a distance from the free end and at a distance from the connection of said duct by means of an electrical through-connection conductor extending outside the outer duct wall to at least one other electrical conductor lying in the other element to be connected to the duct.

When this method is being carried out the difficulty often encountered is that it is virtually impossible during extrusion to embed the first electrical conductor at a constant distance from the outside of the wall of the cable duct.

It is therefore very expedient to remove a section of the outer layer of the wall of the cable duct locally at a distance from the free end of the cable duct and at a distance from the connection of said cable duct by means of a plastic removal element until at least a section of the first electrical conductor is exposed, whereafter the electrical through-connection conductor is connected to this exposed section.

At least a part of an outer layer of the wall above the electrical conductor is preferably stripped off using a hot knife-type cutting element, exposing the electrical conductor at the position where the hot knife-type cutting element acts.

At least a section of the outer layer of the wall above the electrical conductor can expediently be removed using a stripping chisel penetrating gradually deeper into the wall, preferably in such a way that the electrical conductor is cut through, following which the end section thus obtained of the electrical conductor extending in the cable duct towards its other end is connected to the electrical through-connection conductor.

The plastic of the outer layer of the duct wall above the first electrical conductor can expediently also be removed using a cylindrical cutter.

Finally, it is possible to connect the first electrical conductor to a preferably conical pin which is driven from the outside into the duct wall.

According to a very expedient embodiment, a thin plate-shaped part is pressed in the radial direction into the duct wall at right angles to the axial direction of the duct until contact is made between said plate-shaped part and said first electrical conductor.

In order to be sure that the electrical connection conductor can be brought into good contact with the first electrical conductor in the duct wall and, on the other hand, to prevent damage to said electrical conductor by a plastic removal or penetration element, the use of a signal device is recommended, which signal device on contact of the said plastic removal or penetration element with the first conductor emits a signal, for example a light signal, a sound signal or an electrical signal through which the action of the working element or penetration element is stopped.

The invention therefore also relates to a device for carrying out the method according to the invention which is characterised in that it comprises a plastic removal element which is coupled to a signal giver being activated on contact of the plastic removal element with a first electrical conductor embedded in a wall of a cable duct, and to a device which is characterised in that the device is provided with pressure means for pressing an electrically conducting element into a duct wall, in addition to a signal giver which is connected to said electrically conducting element and a first electrical conductor embedded in a duct wall, and being activated on contact between element and conductor.

The invention will now be explained with reference to an example of an embodiment shown in the drawing, in which:

Fig. 1 shows an embodiment of a connection of a cable duct according to the invention;

Fig. 1a shows a connection of a cable duct to a cable distribution pit;

Fig. 2 shows a part of a cable duct with partially exposed electrical conductor;

Fig. 2a shows a part of a cable duct for a connection according to the invention, with partially exposed first electrical conductor after this electrical conductor has been cut through;

Fig. 3 shows a side view of a plastic removal device for exposing such an electrical conductor;

Fig. 4 shows a plastic removal device with special stripping chisel for the removal of plastic from the duct wall while cutting through the first electrical conductor;

Fig. 4a shows a view of a stripping chisel of the type used in a device according to Fig. 4;

Fig. 5 shows a cross section of a cable duct for a connection according to the invention with penetrated plate-shaped cutting element which is making contact with the first electrical conductor;

Fig. 6 shows the same cable duct as that shown in Fig. 5, the first electrical conductor being in contact with a driven screw-type element;

Fig. 7 shows a cutting device for the removal of a section of plastic layer 20;

Fig. 8 shows a cable duct for use in a connection according to the invention with contact pin which is pressed into the wall and is making contact with the first electrical conductor.

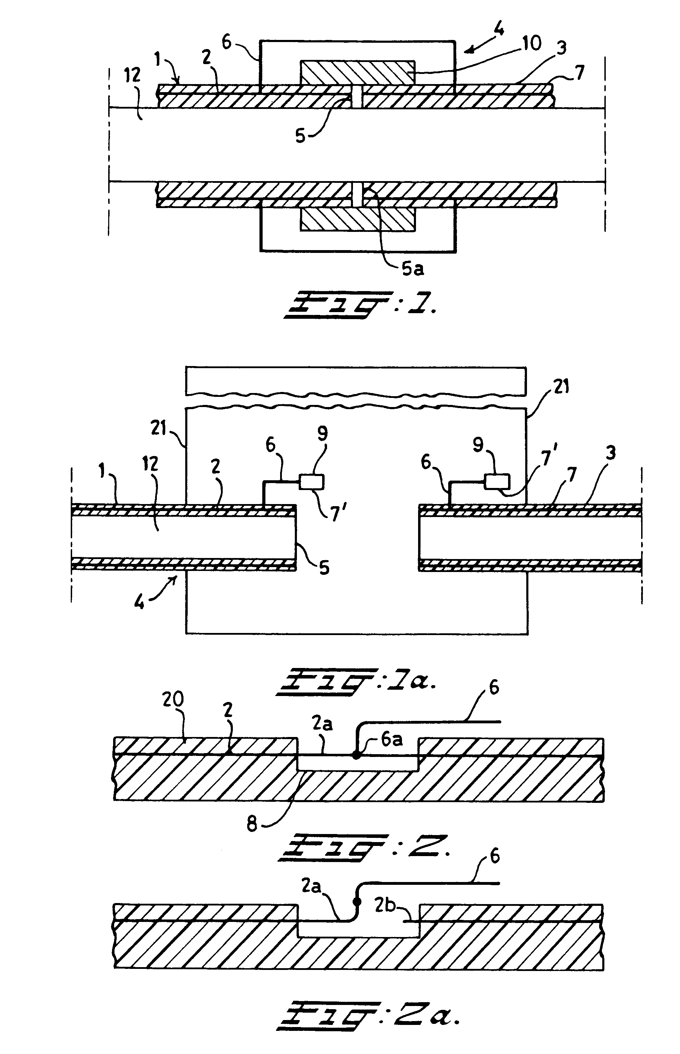

Fig. 1 shows a connection according to the invention comprising a polyethylene cable duct 1 in which a fibre optic cable 12 is placed.

During extrusion a first electrical conductor 2 is embedded in the wall of the cable duct 1 at a short distance from the outside. The electrical conductor in the form of, for example, two copper wires 0.5 mm thick lies at about 0.6 mm from the outside wall of the cable duct 1 and is therefore covered with a plastic outer layer 20.

The cable duct 1 has an external diameter of, for example, 20 mm and a wall thickness of 3.5 mm.

The depth at which the copper wires 2 are situated relative to the outside of cable duct 1 can vary slightly, since it is virtually impossible during extrusion to ensure a precisely accurate position of the electrically conducting copper wires 2 in the duct wall of cable duct 1.

The position of copper wire 2 in the wall of cable duct 1 is indicated by a marking in the lengthwise direction of the cable duct.

The cable duct 1 is connected to another cable duct 3 provided with another electrical conductor 7, also in the form of electrical copper wires.

Both cable ducts 1 and 3 are interconnected by a duct coupling piece 10.

For obtaining a good electrically conducting connection between the first electrical conductor 2 and another electrical conductor 7, the electrical conductor 2 is connected locally to an electrical through-connection conductor 6 which is also connected to the other electrical conductor 7. As can be seen, the connection between electrical through-connection conductor 6 and electrical conductor 2, 7 lies at a distance from the free end 5, 5a of cable duct 2, 3 and at a distance from the coupling piece 10.

A good electrical connection between electrical conductors 2 and 7 is ensured by means of the electrical through-connection conductor 6, and if the cable duct 1 or 3 breaks it is easy to establish where the break has occurred by passing a small electric current through the electrical conductors 2 and 3. If desired, the whole system of duct ends 1 and 3, coupling 10 and electrical through-connection conductor 6 can be shut off with a heat shrunk sleeve.

Fig. 1a shows a cable distribution pit 21 from which fibre optic cables 12 are distributed over different house connections. A cable duct 1 is connected in a sealing manner at 4 to the distribution pit 21. The end face 5 of the cable duct lies at a distance from the connection 4.

At a distance from connection 4 and end face 5 first electrical conductor 2 is connected to a through-connection conductor 6, which is connected at the other side to another electrical conductor in a plug 9 containing the other electrical conductor 7'.

Measuring equipment, for example, can be connected by means of the plug 9.

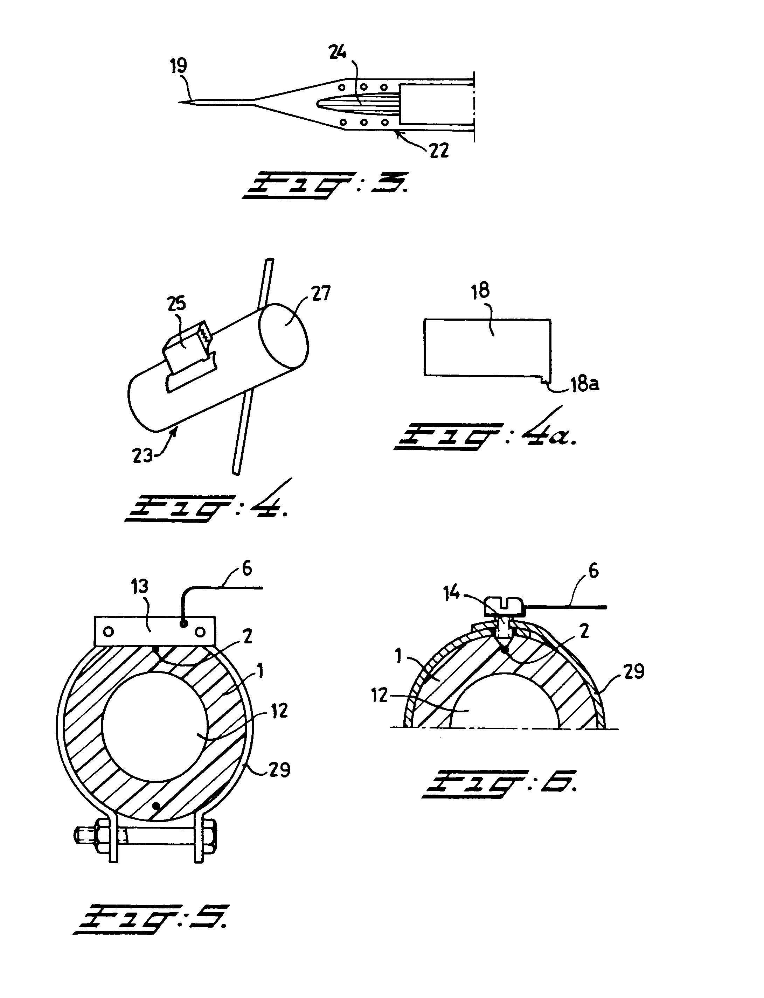

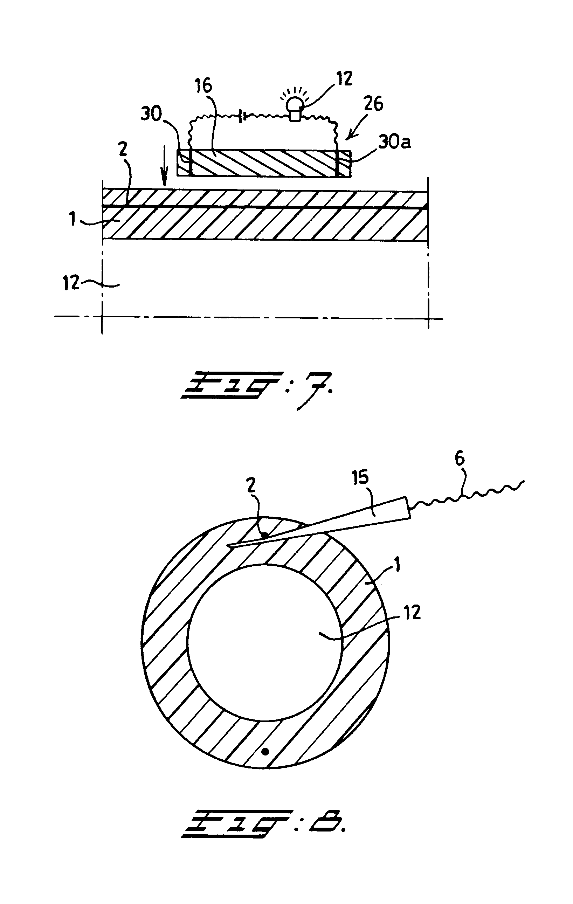

Figs. 2 and 3 show the way in which the first electrical conductor 2 can be exposed for making of the connection to the electrical through-connection conductor 6. For the removal of a section of plastic outer layer 20 above the first electrical conductor 2 use is made of a flat heated knife 19 which cuts away plastic above the electric wires 2 over a particular width (see Fig. 3). As soon as the first electrical conductor or copper wire 2 is reached the thin knife 19 is pressed under the electrical conductor 2, causing a conductor section 7a to be exposed.

After this the connection 6a to the electrical through-connection conductor 6 can be made, for example by soldering, welding or clamping. It will be clear that in this case a very good connection can be obtained on account of the ready accessibility of electrical conductor 2.

The heated knife 19 is preferably a gas cutting torch 22 provided with a special flat nozzle. The following aspects must be taken into consideration during designing of the flat cutting torch nozzle 19:

1. As flat a nozzle 19 as possible, in order to ensure that no more duct material is damaged than is necessary.

2. Rounding off of the side edges of the nozzle, in order to ensure that copper wire 2 is not damaged.

3. The cutting torch nozzle 19 should not be made of material which is too hard, in order to prevent damage to the copper wire.

4. The flame 24 of the gas cutting torch 22 must be capable of being shut off in such a way that the open flame 24 cannot damage the cable duct 1.

5. The mass of the cutting torch nozzle 19 must not be made unnecessarily large, in order to ensure that the heating-up time does not become too great.

It goes without saying that such a nozzle 19 can also be heated electrically, as in the case of a soldering iron. It is, however, preferable to work without electricity when working such cable ducts.

Fig. 2a shows that copper wire section 7a is cut through, following which section 2a is connected to through-connection conductor 6. The section 2b serves no further purpose.

According to another embodiment, as shown in Figs. 4 and 4a, a section of plastic outside layer 20 above the first electrical conductor 2 can be removed using a special stripping chisel 18 in a stripping apparatus 23.

This stripping apparatus 23 comprises a sleeve 27 for sliding over the cable duct and a chisel operating element 25 which moves to and fro and bears chisel 18. While removing plastic from outer layer 20, chisel 18 penetrates gradually further into the plastic duct wall.

Giving the chisel 18 a projection 18a at the chisel end which penetrates deepest means that when the copper wire 2 is reached it can be cut through easily before the remaining part of the chisel 18 can seriously damage the remainder of the copper wire 2. After the copper wire 2 is cut through, it can be pulled away over a certain length and connected to the through-connection conductor 6.

According to another embodiment (see Fig. 5), the work is carried out with a thin cutting plate 13 connected to clamps 29 falling around the cable duct, which thin plate 13 is pressed at right angles to the direction of the copper wire 2 into the cable duct until contact with copper wire 2 takes place.

Two parallel plates 13 lying a short distance from each other can be used if desired.

Instead of a thin plate, it is also possible to work with a sharply pointed screw or heated screw 14 (see Fig. 6).

In order to ensure that good contact is achieved between thin plate or thin plates 13, or pointed screw or heated screw 14, and conductor 2 it is advisable to use a signal device which on contact emits a light signal, sound signal or electrical signal for stopping further penetration of the plate or plates 13, or the pointed screw or heated screw 14.

According to yet another embodiment (see Fig. 7), the section of the plastic of the duct wall above the electrical conductor 2 is removed by cutting with cutting device 23 until the copper wire 2 is touched by cutter 16. The copper wire 2 can then be pulled out of it, and cut through and connected to the electrical through-connection conductor 6.

In order to prevent damage to the copper wire 2, the cutter is provided with two discs 30, 30a which are isolated from each other and make contact with each other as soon as the copper wires 2 are touched.

A signal giver 12 will then emit a light signal, sound signal or electrical signal to stop the cutting device 23.

Finally, a conical pin 15 can expediently be hammered into the duct wall, which pin is brought into contact with the electrically conducting copper wire 2 (see Fig. 8). This pin 15 is then connected by means of through-connection conductor 6 to another conductor 7.

**Claims**

1. Connection (4) of a cable duct (1) of thermoplastic material to another element (3) connected to the cable duct (1), characterised in that the cable duct (1) is provided with at least one elongated first electrical conductor (2) embedded in the duct wall and running in the axial direction, which first electrical conductor (2) is connected at a distance from the free end (5) and at a distance from the connection (4) of said duct (1) to an electrical through-connection conductor (6) extending outside the duct and connected with at least one other electrical conductor (7, 7') situated in the other element (3, 9).

2. Connection according to claim 1, characterised in that the position of the first electrical conductor (2) in a cable duct (1) in the peripheral direction is indicated on the outside wall of the duct by a marking in the lengthwise direction.

3. Method for making a connection (4) of a cable duct (1) of thermoplastic material to another element (3) to be connected to the cable duct, characterised in that the first electrical conductor (2) of the cable duct (1) provided with at least one first electrical conductor (2) embedded in the duct wall and running in the axial direction, is connected at a distance from the free end (5) and at a distance from the connection (4) of said duct (1) by means of an electrical through-connection conductor (6) extending outside the outer duct wall to at least one other electrical conductor (7, 7') lying in the other element (3, 9) to be connected to the duct.

4. Method according to claim 3, characterised in that a section of the outer layer (20) of the wall of cable duct (1) is removed locally at a distance from the free end (5) of the cable duct (1), and at a distance from the connection (4) of said cable duct, by means of a plastic removal element (16, 18, 19), until at least a section of the first electrical conductor (2) is exposed, following which the electrical through-connection conductor (6) is connected to this exposed section of conductor (2), preferably after cutting through said conductor (2) at said exposed section.

5. Method according to claim 4, characterised in that a section of the outer layer (20) of the wall above the first electrical conductor (2) is removed by means of:

a heated knife-type cutting element (19), exposing a section of the first electrical conductor (2) at the position where the heated knife-type cutting element (19) acts; or

a stripping chisel (18) penetrating gradually deeper into the wall of the cable duct (1), preferably on the action of the stripping chisel (18) the first electrical conductor (2) is cut through and the electrical through-connection conductor (6) is then connected to the end (2a) of the first electrical conductor (2) extending in the axial direction towards the other end of the cable duct (1), or

a cylindrical cutter (16).

6. Method according to claim 4 or 5, characterised in that during the plastic removal operation a signal is emitted on contact of the plastic removal element (16, 18, 19) with the first electrical conductor (2).

7. Method according to claim 3, characterised in that an electrically conducting element (13, 14, 15) is pressed in the radial direction from the outside into the duct wall until it comes into contact with the first electrical conductor (2), and this electrically conducting element (13, 14, 15) is connected to the through-connection conductor (6), said electrically conducting element being

a thin plate (13) or two parallel plates which after placing at right angles to the axial direction of the cable duct are pressed in the radial direction through the wall of the cable duct until they make contact with the first electrical conductor (2); or

a heated or unheated screw (14) which is pressed in the radial direction into the duct wall until it is in contact with the first electrical conductor (2); or

a preferably conical pin (15) being pressed from the outside into the duct wall until it is in contact with the above-mentioned first electrical conductor (2).

8. Method according to claim 7, characterised in that a signal is emitted when the first electrical conductor (2) comes into contact with the electrically conducting element (13, 14, 15).

9. Device for carrying out the method according to one or more of claims 3 - 6, characterised in that it comprises a plastic removal element (16, 18, 19) which is coupled to a signal giver (12) being activated when the plastic removal element (16, 18, 19) comes into contact with a first electrical conductor (2) embedded in a wall of a cable duct (1).

10. Device for carrying out the method according to one or more of claims 3, 7 or 8, characterised in that the device is provided with pressure means for pressing an electrically conducting element (13, 14, 15) into a wall, of a cable duct 1 in addition to a signal giver (12) which is connected to said electrically conducting element and a first electrical conductor (2) embedded in a duct wall, and being activated on contact between element (13, 14, 15) and first electrical conductor (2).

Fig. 1.

Fig. 1a.

Fig. 2.

Fig. 2a.

*Fig: 3.*

*Fig: 4.*

*Fig: 4a.*

*Fig: 5.*

*Fig: 6.*

FIG: 7.

FIG: 8.

European
Patent Office

EUROPEAN SEARCH
REPORT

Application Number

**EP 91 20 1811**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 860 742  (MEDNEY) <br> * Abstact; figures * <br> – – – | 1,3,4 | F 16 L 25/00 |
| A | DE-A-3 543 233  (WACKER CHEMIE GmbH) <br> * Abstract; figures * <br> – – – | 1 | |
| A | EP-A-0 159 307  (KABEL- UND GUMMIWERKE AG) <br> – – – – – | | |

|  |  |
|---|---|
| | TECHNICAL FIELDS SEARCHED (Int. Cl.5) |
| | F 16 L <br> G 02 B |

The present search report has been drawn up for all claims

| Place of search | Date of completion of search | Examiner |
|---|---|---|
| The Hague | 22 October 91 | BARTSCH A.W. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

 

& : member of the same patent family, corresponding
document